# EUROPEAN PATENT SPECIFICATION

(11) **EP 2 508 557 B1**
(45) Date of publication and mention of the grant of the patent: **17.08.2016**
(21) Application number: 11160891.5
(22) Date of filing: 01.04.2011
(51) Int. Cl.: C08K 5/00

(54) **Method for preparing pH-insensitive surfactant free polymer particle dispersion in aqueous medium**
Verfahren zur Herstellung eines pH-empfindlichen Tensids ohne Polymerteilchendispersion in einem wässrigen Medium
Procédé pour la préparation d'une dispersion de particules polymères sans agent tensioactif insensible au pH dans un milieu aqueux

(43) Date of publication of application: 10.10.2012
(73) Proprietor: Arkema Inc., Philadelphia, PA 19103 (US)
(72) Inventor: Ness, Jason S., Norristown PA 19403 (US); Macy, Noah E., ROYERSFORD PA 19468 (US)
(74) Representative: Albani, Dalila

(56) References cited:
- EP-A1- 0 544 569
- EP-A1- 1 865 025
- WO-A1-2005/087816
- WO-A1-2006/043942
- WO-A2-03/040241
- US-A1- 2006 078 800
- US-A1- 2007 082 993
- US-A1- 2007 142 513
- US-A1- 2008 108 749

## Description

### FIELD OF THE INVENTION

The invention relates to a polymer particle dispersion in an aqueous medium and a method of making the same.

### BACKGROUND OF THE INVENTION

Polymer particle dispersions or emulsions are used in a number of applications, such as adhesives, paints, paper coatings, textile coatings, etc. Emulsion polymerization is a type of radical polymerization often used to form dispersions of polymer particles that usually begin with an emulsion incorporating water, at least one monomer, and surfactant(s). Surfactants are often critical in conventional emulsion polymerization because the surfactant provides sites for particle nucleation (i.e., monomer swollen micelles), controls latex particle size, and provides colloidal stability to the formed polymer particles. However, for many latex applications, small molecule surfactants have several disadvantages. For example, small molecule surfactants can impart high water sensitivity to films (leading to blush) and can desorb during film formation (detracting from surface properties and final performance).

There have been recent developments in providing effective emulsion polymerizations without the need for a surfactant, however. For example, an American Chemical Society manuscript entitled "Nitroxide-Mediated Controlled/Living Free-Radical Surfactant-Free Emulsion Polymerization of Methyl Methacrylate Using a Poly(methacrylic acid)-Based Macroalkyoxyamine Initiator" by Charleux et al. (Macromolecules 2009, 42, 95-103) describes the use of certain macroinitiators in a surfactant-free emulsion polymerization. In particular, a poly(methacrylic acid)-based polymer, such as poly(methacrylic acid-*co*-styrene) is described as a living macroinitiator used in a surfactant-free, batch emulsion polymerization.

It has been found, however, that emulsion polymerization using macroiniators based on acrylic acid, methacrylic acid-co-styrene or methacrylic acid-co-styrene sulphonate sodium salt, for example, requires the latex to have a basic pH. This is because a low pH emulsion may lead to latex instability and coagulation, especially at higher solids contents, during synthesis or shortly thereafter.

### SUMMARY OF THE INVENTION

Aspects of the present invention include eliminating or reducing the pH sensitivity of the latex and allowing it to remain stable at all pH values, especially at low pH values (e.g., less than 7). The present invention includes a specific macroinitiator, which imparts pH insensitivity to the polymer emulsion. Due to this improvement, the pH need not be maintained at a specific basic value (e.g., a buffer is not required). Thus, the present invention provides for a robust process for manufacturing high solids, stable polymer particle dispersions using a pH-insensitive macroinitiator and surfactant-free controlled radical emulsion polymerization.

According to an embodiment of the present invention, a polymer particle dispersion in an aqueous medium comprises an emulsion polymerized polymer and a macroinitiator, which comprises a hydrophilic, pH-insensitive monomer in reacted (e.g., polymerized) form, covalently bonded to the emulsion polymerized polymer. The emulsion polymerized polymer is comprised of at least one additional ethylenically unsaturated monomer in polymerized form.

The macroinitiator is reacted with at least one monomer to form a polymer of the formula R-{[(A)ₓ(B)_{y}]-[(C)ₘ]ₚ-Y} _{n or 1}, where A is the hydrophilic, pH-insensitive monomer, B is a comonomer, C is at least one ethylenically unsaturated monomer, Y is a terminal group, x≥1, y≥0, m≥1, n≥2, and p≥1, wherein if p>1 each C segment has a distinct composition, and A and B may appear in any order or sequence within the living macroinitiator, and R is of the formula (I) or (III): 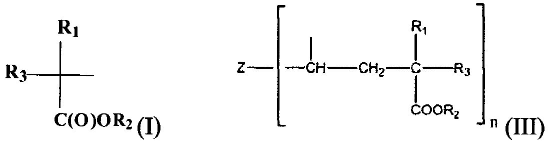 wherein R₁ and R₃, identical or different, represent a linear or branched alkyl group, with the number of carbon atoms from 1 to 3; R₂ represents a hydrogen atom or a linear or branched alkyl group having a number of carbon atoms from 1 to 8, a phenyl group, an alkaline metal ion, or an ammonium ion; and Z represents an aryl group or a group of the formula Z₁-[X-C(O)]ₙ, in which, Z₁ represents a polyfunctional structure where X is an oxygen atom, a nitrogen atom carrying a carbon group, a hydrogen atom, or a sulfur atom.

According to another embodiment of the present invention, a method of making a polymer particle dispersion includes reacting at least one monomer with a macroinitiator and without a surfactant to effect polymerization of the at least one monomer, wherein the macroinitiator comprises a hydrophilic, pH-insensitive monomer in polymerized form and the at least one monomer is at least one of an ethylenically unsaturated monomer.

### DETAILED DESCRIPTION OF THE INVENTION

Aspects of the present invention include polymer particle dispersions in an aqueous medium, and living macroinitiators comprising a pH-insensitive monomer in polymerized form used in the preparation of polymer particle dispersions.

As used herein, "latex," "latices," and "polymer particle dispersion" may be used interchangeably to encompass any polymer particles known to those skilled in the art, which may be in the form of a stable aqueous colloidal suspension, emulsion, or dispersion or the polymer particles separated therefrom.

As used herein, unless specified otherwise, the values of the constituents or components are expressed in weight percent or % by weight of each ingredient. All values provided herein include up to and including the endpoints given.

In one embodiment of the present invention, a polymer particle dispersion in an aqueous medium comprises an emulsion polymerized polymer and a macroinitiator, which comprises a hydrophilic, pH-insensitive monomer in reacted form, covalently bonded to the emulsion polymerized polymer. The emulsion polymerized polymer is comprised of at least one additional ethylenically unsaturated monomer in polymerized form, such as (meth)acrylates, styrenes, (meth)acrylamides, (meth)acrylonitriles, and mixtures thereof.

The polymer particle dispersion comprises a macroinitiator, which is in reacted or polymerized form. Thus, while monomers are described, it will be understood to the skilled person that the macroinitiator comprises the monomer(s) in reacted form. In other words, the repeated units in the polymer are known as the "residue" of the monomer that formed that repeat unit. The polymers may be linear, branched, crosslinked, etc., or any combination thereof. The polymers may be homopolymers (i.e., built up from one type of monomer) or copolymers (built up from two or more types of monomer). Copolymers may have the monomer units arranged randomly, in blocks, in sequence, statistically, gradient, or any combination thereof. Gradient polymers include multicomponent polymers whose structures or compositions are not macroscopically homogenous, but vary as a function of position in the sample. The method of making the macroinitiator is described in detail below.

The macroinitiator acts as the initiator, stabilizer, and/or control agent during the controlled (or living) free-radical polymerization process. Chain extension of the macroinitiator with ethylenically unsaturated monomers produces amphiphilic block copolymers that self-assemble in situ, forming living micelles. As living polymerization continues these living micelles become self-stabilized polymer particles, without any need for conventional surfactants. The macroinitiator is no longer living after chain extension, but the final polymer particle dispersion is living, allowing for synthesis of complex polymer architectures in surfactant-free emulsion polymerization.

The living macroinitiator comprises a hydrophilic, pH-insensitive monomer or polymer. As used herein, "hydrophilic" and "water soluble" may be used interchangeably to describe a monomer that is readily dissolvable in an aqueous medium. In particular, the monomer may contain a hydrophilic molecule or portion thereof that is charge-polarized and capable of hydrogen bonding. The living macroinitiator is pH-insensitive and does not respond to changes in pH in the surrounding medium. For example, a pH-insensitive monomer or polymer will not swell or collapse in response to a change in pH. In particular, effective pH-insensitive monomers or polymers will remain water soluble regardless of the pH.

The living macroinitiator comprises at least one water-soluble salt of a monomer comprising an acryloyl group (H₂C=CH-C(=O)-) and a sulfonic acid group (-S(=O)₂-OH) in polymerized form. In particular, the monomer comprising an acryloyl group and a sulfonic acid group may be 2-acrylamido-2-methylpropanesulfonic acid (AMPS).

The pH-insensitive monomer is polymerized with an alkoxyamine initiator (e.g., an initiator containing an -N-O- bond capable of forming a nitroxide) to form the living macroinitiator. An aqueous living macroinitiator solution may be formed by performing a controlled radical polymerization of the hydrophilic, pH-insensitive monomer in the presence of an alkoxyamine compound having either formula (IV) or (V) 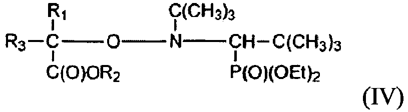 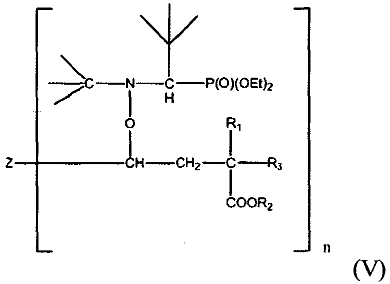 where R₁ and R₃ are the same or different and represent a linear or branched alkyl group, with the number of carbon atoms from 1 to 3. R₂ represents a hydrogen atom, a linear or branched alkyl group having a number of carbon atoms from 1 to 8, a phenyl group, an alkaline metal ion, or an ammonium ion. Z represents an aryl group or a group of the formula Z₁-[X-C(O)]ₙ, in which, Z₁ represents a polyfunctional structure where X is an oxygen atom, a nitrogen atom carrying a carbon group, a hydrogen atom, or a sulfur atom; and n≥2.

Preferably, the alkoxyamine initiator is a nitroxide-based alkoxyamine initiator. A suitable nitroxide-based alkoxyamine is *N*-(2-methylpropyl)-*N*-(1-diethylphosphono-2,2,-dimethylpropyl)-*O*-(2-carboxylprop-2-yl) hydroxylamine (also known as BLOCBUILDER^{®} or BB or BB-MA, which is available from Arkema Inc. with an office in Philadelphia, PA) having the following formula: 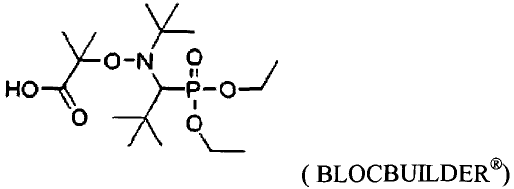 The BLOCBUILDER^{®} initiator contains a nitroxide component, which is *N-tert*-butyl-*N-*(1-diethylphosphono-2,2-dimethylpropyl) nitroxide (also known as SG1 or SG-1, which is also available from Arkema Inc.) having the following formula:

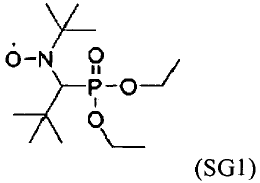

In order to further control the reaction between the alkoxyamine compound and the pH-insensitive monomer, a secondary or additional nitroxide compound may also be added. For example, during the controlled radical polymerization of the hydrophilic, pH-insensitive monomer and the alkoxyamine compound, *N-tert-*butyl*-N*-(1-diethylphosphono-2,2-dimethylpropyl) nitroxide (SG1) may be added.

The hydrophilic, pH-insensitive monomer or polymer may be copolymerized with other comonomers (B). For example, other comonomers may be selected to modify the properties of the living macroinitiator or reduce the costs by requiring less of the pH-insensitive components. Suitable comonomers (B) may include those that remain anionic in nature over a broad range of pH. For example, the living macroinitiator may include a non-sulfonated monomer copolymerized with the hydrophilic, pH-insensitive monomer. Additionally or alternatively, the living macroinitiator may include a sulfonated or a phosphonated monomer copolymerized with the hydrophilic, pH-insensitive monomer.

The polymer particle dispersion comprises an emulsion polymerized polymer (C). The emulsion polymerized polymer may be comprised of at least one additional ethylenically unsaturated monomer in polymerized form. For example, the emulsion polymerized polymer may comprise one or more monomers, in polymerized form, selected from the group consisting of (meth)acrylates, styrenes, (meth)acrylamides, (meth)acrylonitriles, and mixtures thereof. As used herein, the designation "(meth)," as would be recognized to one of ordinary skill in the art, is intended as an optional substituent. In other words, (meth)acrylates encompasses both acrylates and methacrylates. Additionally, the designation of "acrylates," "acrylamides," etc. is intended to encompass the esters, salts, and free acids of the compound, which may be used as the monomers described herein.

Suitable acrylates may include C₁ -C12 alkyl esters of acrylic acid, for example. Acrylic monomers may include, for example, acrylic acid or its salts, alkyl; cycloalkyl or aryl acrylates; methyl, ethyl, butyl, ethylhexyl or phenyl acrylate; hydroxyalkyl acrylates; 2-hydroxyethyl acrylate; etheralkyl acrylates; 2-methoxyethyl acrylates; alkoxy or aryloxy polyalkylene glycol acrylates; methoxy polyethylene glycol acrylates; ethoxy polyethylene glycol acrylates, methoxy polypropylene glycol acrylates, methoxy polyethylene glycol/polypropylene glycol acrylates or their mixtures; aminoalkyl acrylates; 2-(dimethylamino)ethyl acrylate (DMAEA); amine salt acrylates; [2-(acryloyloxy)ethyl]trimethylammonium chloride or sulphate; [2-(acryloyloxy)ethyl] dimethylbenzylammonium chloride or sulphate; fluorinated acrylates, silylated acrylates or phosphorus-comprising acrylates; such as alkylene glycol phosphate acrylates. Preferred monomers may include butyl acrylate, methyl acrylate, ethyl acrylate, butyl acrylate, 2-ethylhexyl acrylate, decyl acrylate, etc.

Suitable methacrylates may include C₁ -C12 alkyl esters of methacrylic acid, for example. The methacrylate monomers may include, for example, methacrylic monomers; methacrylic acid or its salts; alkyl, cycloalkyl, alkenyl or aryl methacrylates; methyl, lauryl, cyclohexyl, allyl or phenyl methacrylates; hydroxyalkyl methacrylates; 2-hydroxyethyl methacrylate or 2-hydroxypropyl methacrylate etheralkyl methacrylates; 2-ethoxyethyl meth-acrylate; alkoxy or aryloxy polyalkylene glycol methacrylates; methoxy polyethylene glycol methacrylates, ethoxy polyethylene glycol methacrylates, methoxy polypropylene glycol methacrylates, methoxy polyethylene glycol/polypropylene glycol methacrylates or their mixtures; aminoalkyl methacrylates; 2-(dimethylamino)ethyl methacrylate (MADAME); amine salts methacrylates; [2-(methacryloyloxy)ethyl]trimethylammonium chloride or sulphate and [2-(methacryloyloxy)ethyl]dimethylbenzylammonium chloride or sulphate fluorinated methacrylates; 2,2,2-trifluoroethyl methacrylate; silylated methacrylates; 3-methacryloyloxypropyltrimethylsilane; phosphorus-comprising methacrylates; alkylene glycol phosphate methacrylates, hydroxyethylimidazolidone methacrylate, hydroxyethylimidazolidinone methacrylate and 2-(2-oxo-1-imidazolidinyl)ethyl methacrylate.

Suitable styrenes may include styrene, substituted styrenes including C₁ -C4 alkyl substituted styrene, sodium styrenesulphonate, and halogenated styrenes, such as, alphamethylstyrene, 2-chlorostyrene, 4-chlorostyrene, bromostyrene, 2,5-dichlorostyrene and 4-methoxystyrene. Suitable acrylamide and methacrylamide monomers may include, for example, acrylamide, methacrylamide, N-methyl(meth)acrylamide, N-ethyl(meth)acrylamide, N,N-dimethyl(meth)acrylamide, N-isopropyl(meth)acrylamide, and N-t-octyl(meth)acrylamide. Suitable acrylonitriles and methacrylonitriles may also be selected by one of skill in the art.

The living macro initiator and at least one monomer may be reacted to form a polymer of the following formula:

R-{[(A)ₓ(B)_{y}]-[(C)ₘ]ₚ-Y}_{n or 1},

where A is the hydrophilic, pH-insensitive monomer, B is a comonomer, C is at least one ethylenically unsaturated monomer, Y is a terminal group, x≥1, y≥0, m≥1, n≥2, and p≥1, wherein if p>1 each C segment has a distinct composition, and A and B may appear in any order or sequence within the living macroinitiator, and R is of the formula (I) or (III): 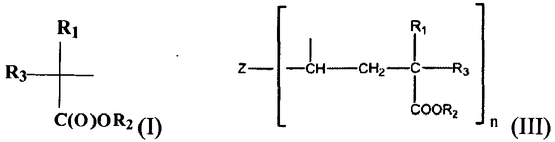 wherein R₁ and R₃, identical or different, represent a linear or branched alkyl group, with the number of carbon atoms from 1 to 3; R₂ represents a hydrogen atom or a linear or branched alkyl group having a number of carbon atoms from 1 to 8, a phenyl group, an alkaline metal ion, or an ammonium ion; and Z represents an aryl group or a group of the formula Z₁-[X-C(O)]ₙ, in which, Z₁ represents a polyfunctional structure where X is an oxygen atom, a nitrogen atom carrying a carbon group, a hydrogen atom, or a sulfur atom.

For example, Y may be R' of the formula (II):

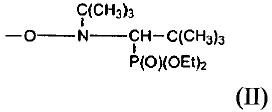

At least a portion of the macroinitiator is covalently bonded to the emulsion polymerized polymer. In other words, it is not necessary that all of the macroinitiator is covalently bonded to the emulsion polymerized polymer.

In one embodiment of the present invention, the emulsion polymerized polymer particles may comprise homopolymers, of a single type of monomer, or copolymers, of more than one type of monomer. The copolymers may be statistical, random, or gradient copolymers. The copolymers may contain one or more blocks selected from the group consisting of pure (meth)acrylic blocks, mixed (meth)acrylic blocks, and mixed (meth)acrylic/styrenic blocks. In one embodiment, the emulsion polymerized polymer comprises polybutylacrylate and polymethylmethacrylate. In another embodiment, the emulsion polymerized polymer comprises polybutylacrylate, poly methylmethacrylate, and polystyrene. In yet another embodiment, the emulsion polymerized polymer comprises polybutylacrylate, poly methylmethacrylate, and polymethacrylic acid.

The particle dispersion is in an aqueous medium. The preferred aqueous medium is water although other aqueous solvents including polar aprotic solvents may also be suitable. The water may be of any suitable type, e.g., distilled, deionized, treated, etc. The type and amount of aqueous medium is not especially limited, but may be employed in amounts to achieve adequate emulsification and to provide desired particle size and particle size distribution.

The present invention provides for stable polymer particle dispersions at all pH values. In particular, the dispersions are stable at low pH values (e.g., less than 7). In one embodiment of the present invention, the polymer particle dispersion has a pH less than 7. The dispersions were found to be stable even at very low pH values, on the order of about 3. Thus, the present invention reduced or eliminated the pH sensitivity of typical latex formulations. Accordingly, the pH need not be maintained at a specific basic value, and buffers are not required to maintain or achieve a necessary pH.

The stable latices are particularly effective in applications, such as paint, coating, or adhesive compositions. Thus, a paint, coating, or adhesive composition may comprise the polymer particle dispersions described herein comprising an emulsion polymerized polymer and a macroinitiator, which comprises a hydrophilic, pH-insensitive monomer in reacted form, covalently bonded to the emulsion polymerized polymer.

The paint, coating, or adhesive composition may also comprise at least one additional paint, coating, or adhesive component. Paint components are known to those skilled in the art and may include, for example, pigments, binders, solvents, catalysts, thickeners, stabilizers, emulsifiers, texturizers, adhesion promoters, UV stabilizers, flatteners (de-glossing agents), biocides, and the like. Coating components are also well known in the industry and may include, for example, defoamers, lubricants, plasticizers, etc. Adhesive components are also well known and may include, for example, defoamers, curing catalysts, dissociation catalysts, fillers, rheology modifiers, antioxidants, pigments, tackifiers, plasticizers, adhesion promoters, stabilizers, flame retardants, etc. These additives may be incorporated in a conventional manner and at any convenient point in the preparation of the latex or of the paint, coating, or adhesive compositions.

In an embodiment of the present invention, a method of making a polymer particle dispersion includes reacting at least one monomer with a living macroinitiator in an aqueous media and without a surfactant to effect polymerization of the at least one monomer, wherein the living macroinitiator comprises a hydrophilic, pH-insensitive monomer in polymerized form and the at least one monomer is an ethylenically unsaturated monomer.

As used herein, "surfactant free" or 'without a surfactant" is intended to encompass none or only trace amounts of surfactant. In other words, a surfactant is not purposefully added to the reaction medium.

The macroinitiator may be formed using any suitable techniques known in the art. In one embodiment of the present invention, the macroinitiator is formed by performing a controlled radical polymerization of the hydrophilic, pH-insensitive monomer and an alkoxyamine compound comprising a nitrogen-oxygen bond.

The controlled radical polymerization may be a nitroxide-mediated (NMP) or reversible-addition-fragmentation-transfer (RAFT) polymerization. Nitroxide-mediated polymerization (NMP) is well known to those skilled in the art and allows the propagating radical concentration to be limited to levels that allow controlled polymerization. Reversible-addition-fragmentation-transfer (RAFT) polymerization is also well known to those of ordinary skill in the art and is effective because stabilized radical intermediates reintroduce a radical capable of reinitiation or propagation with monomer(s) with limited termination reactions.

The macroinitiator may also be prepared with a reversible-addition-fragmentation-transfer (RAFT) agent. RAFT agents may include, for example, *N,N'-*azobis(isobutyronitrile) (AIBN), dibenzyl trithiocarboante (DBTTC), 1-phenylprop-2-yl phenyldithioacetate; 1-phenylethyl phenyldithioacetate, cumyl phenylditioacetate, 2-phenylprop-2-yl dithiobenzoate; 1-phenylprop-2-ylp-bromodithiobenzoate; 1-phenylethyl dithiobenzoate; 2-cyanoprop-2-yl dithiobenzoate; 4-cyanopentanoic acid dithiobenzoate; 1-acetoxyethyl dithiobenzoate; hexakis(thiobenzoylthiomethyl)benzene; 1,4-bis(thiobenzoylthiomethyl)benzene; 1,2,4,5-tetrakis(thiobenzoylthiomethyl)benzene; ethoxycarbonylmethyl dithioacetate; 2-(ethoxycarbonyl)prop-2-yl dithiobenzoate; tert-butyl dithiobenzoate; 1,4-bis(2-thiobenzoylthioprop-2-yl)benzene; 4-cyano-4-(thiobenzoylthio)pentanoic acid; dibenzyl trithiocarbonate; carboxymethyl dithiobenzoate; s-benzyl diethoxyphosphinyldothioformate; 2,4,4-trimethylpent-2-yl dithiobenzoate; 2-(ethoxycarboxyl)prop-2-yl dithiobenzoate; 2-phenylprop-2-yl 1-dithionaphthalate; 2-phenylprop-2-yl 4-chlorodithiobenzoate.

Other suitable ingredients may also be included in any of the polymerization reactions described herein. For example, acids, salts, chain transfer agents, initiators, reductants, and control agents, can also be employed in the preparation of the living macroinitiator or the polymer particle dispersion and may be incorporated at any suitable time.

### EXAMPLES

### Example 1: Preparation of 3kg/mol poly(AMPSNa) macroinitiator and poly(AMPSNa-b-BA-b-BA/MMA/St) Surfactant-Free Latex

The following ingredients were weighed into a 2L stainless steel reactor: 389.29g of 50wt% AMPS-Na(aq.), 2.265g SG1, 481.515g de-ionized water, 24.805g BB-MA (obtainable from Arkema Inc. with offices in Philadelpha, PA, 6.50x10⁻² moles, target Mₙ ≈ 3.0kg/mol), and 17.296g of 20wt% NaOH(aq.). The mixture is diluted with 178.71g deionized water and degased with nitrogen for 10 minutes. The mixture is heated with stirring at 95-105°C for 4 hours. The product was collected (about 95%cv AMPSNa). The aqueous macroinitiator solution (pAMPSNa or polymerized-AMPSNa) was used without further purification.

Into a 2L stainless steel reactor, 653.2g de-ionized water, 2.42g of sodium carbonate and 80.4g aqueous p(AMPSNa) macroinitiator solution was added. To this homogeneous solution, 16.8g butyl acrylate (BA) was added. The mixture was bubbled with nitrogen while stirring, then heated at 100°C for 2 hours (95%cv BA). The resulting latex is about 4.8% solids with low particle size.

To 752g of the above latex, 424.2g BA, 35.0g styrene, 224.0g methyl methacrylate (MMA) was added, with stirring. The polymer was reacted to 92% conversion of MMA before adding conventional free radical initiator(s) to "chase" residual monomer. A solution of 3.22g of sodium formaldehyde sulfoxylate and 32.2g deionized water was added to the latex and held at 100°C for 15 minutes, followed by the addition of 3.79g *n-*octyl mercaptan, then 1.89g *t*-butyl hydroperoxide and 16.5g of de-ionized water. The polymer was reacted for 2 hours at 108°C, to 99+% conversion of monomer.

### Example 2: Preparation of 2.8kg/mol poly(Hydroxyethyl Acrylate) and poly(Hydroxyethyl Acrylate-b-MMA) Surfactant-Free Latex

A non-ionic first block was prepared from hydroxyethyl acrylate. 5.0400g hydroxyethyl acrylate (HEA), 9.949g de-ionized water, 0.174g of sodium carbonate, and 0.682g of BB-MA (1.79x10⁻³ moles, target Mₙ ≈ 2.8kg/mol), were polymerized for 3 hours at 90°C (98%cv HEA).

1.2626g of this low molecular weight aqueous p(hydroxyethyl acrylate) solution was added to a vial with 11.424g of de-ionized water and 3.514g MMA. The mixture was polymerized for 1 hour at 100°C, reaching 65% conversion of MMA. Although the particle size was bimodal, the latex was stable.

### Example 3: Preparation of a poly(AMPSNa-b-BA-b-MMABA-gradient) Triblock Copolymer Surfactant-Free Latex

50kg/mol pBA first block was prepared using a 2kg/mol p(AMPSNa) macroinitiator. To a 2-L Parr high-pressure reactor was charged: 257.7g de-ionized water, 0.43g NaHCO₃, 35.3g of 14.4wt% aqueous p(AMPSNa) macroinitiator solution (5.1 g p(AMPSNa), 2.54x10⁻³ moles, Mₙ ≈ 2.0kg/mol) and 149.5g butyl acrylate (BA). The reactor was sealed, agitated, sparged with nitrogen and heated at 120°C until 85% BA conversion was obtained. The reactor was then cooled to room temperature. The latex had 28.4% solids and an intensity-average particle size, D_{I} = 130nm.

The p(MMA-co-BA) gradient copolymer second block was prepared as follows. 80.5g methyl methacrylate was added to the above latex. The reactor was sealed, agitated, sparged with nitrogen and heated at 105°C until reaching 69.5% MMA conversion and 51% conversion of the residual BA. At this point, the latex had 36.9% solids and D_{I} = 143.1nm. With the reactor at 105°C, a solution of 0.61g sodium formaldehyde sulfoxylate and 10.0g de-ionized water was charged to the reactor via peristaltic pump. After 1 hour, all monomer conversions were >99+%. Final latex was 42.6% solids and D_{I} = 158nm. Block copolymer composition (in wt.%, based on GC conversion) was 2.2% p(AMPSNa), 55.6% pBA, and 42.2% p(MMA_{80.3%}/BA_{19.7%}).

### Example 4: Preparation of a poly(AMPSNa-b-BA-b-MMA/MAA/BA-gradient) Triblock Copolymer Surfactant-Free Latex

3kg/mol pBA first block was prepared using a 2kg/mol p(AMPSNa) macroinitiator. To a 2-L Parr high-pressure reactor was charged: 853.3g de-ionized water, 3.57g Na₂CO₃, 0.14g NaOH, 39.80g of 42.4wt% aqueous p(AMPSNa) macroinitiator solution (16.8g p(AMPSNa), 5.60x10⁻³ moles, Mₙ ≈ 2.0kg/mol) and 16.8g butyl acrylate. The reactor was sealed, agitated, sparged with nitrogen and heated at 100°C for 1 hour, resulting in 100% BA conversion. The reactor was cooled to room temperature. The latex had 2.5% solids and an intensity-average particle size, D_{I} = 373nm.

The p(MMA-co-MAA-co-BA gradient copolymer) second block was prepared as follows. 246.8g methyl methacrylate, 10.7g methacrylic acid (MAA), and 428.54g butyl acrylate was added to the above latex. The reactor was sealed, agitated, sparged with nitrogen and heated at 108°C for 10 hours, followed by heating at 110°C for 12 hours resulting in 97.5% MMA conversion, 100% MAA conversion, and 86.7% BA conversion (91% global monomer conversion). The reactor was cooled to room temperature. The latex had 38.8% solids and D_{I} = 260nm.

The residual monomers were "chased" via conventional free radical initiators. To the above latex was added a solution of 1.42g *n*-octyl mercaptan, 1.10g sodium formaldehyde sulfoxylate and 10.8g de-ionized water. The reactor was sealed, agitated, sparged with nitrogen and heated to 70°C, after which a solution of 0.7g *t*-butyl hydroperoxide and 6.0g de-ionized water was charged to the reactor via peristaltic pump. After 1 hour at 70°C, all monomer conversions were >99+%. Final latex had 40.6% solids and D_{I} = 259nm. Block copolymer composition (in wt.%, based on GC conversion) was 2.6% p(AMPSNa), 2.6% pBA, and 94.9% p(MMA_{38.6%}/MAA_{1.7%}/BA_{59.6%})·

### Example 5: Stability of a poly(AMPSNa-b-BA-b-MMABA-gradient) Triblock Copolymer Surfactant-Free Latex at low pH

An aliquot of the latex in Example 3 was titrated with 0.8% HCl(aq.) until pH < 3.

| Description | pH | Duration | D_{I} (nm) | Coagulation |
|---|---|---|---|---|
| Ex. 3 latex | 6 | - | 160.3 | none |
| Ex. 3 latex | 3 | - | 155.5 | none |
| Ex. 3 latex | 3 | 1 week | 161.2 | none |
| Ex. 3 latex | 3 | 6.5 weeks | 155.3 | none |
| Ex. 3 latex | 3 | 88 weeks | 154.9 | none |

### Example 6: Preparation of 5 kg/mol poly(Hydroxyethyl methacrylate-co-AMPSNa) and poly(HEMA/AMPS)-b-PMMA Surfactant-Free Latex

A mixed sulfonate/hydroxyl first block was prepared from hydroxyethyl methacrylate. 2.153g hydroxyethyl methacrylate (HEMA), 12.7742g of 50wt% AMPSNa(aq.), 0.021g SG1, 1.580g de-ionized water, and 0.649g of BB-MA (1.79x10⁻³ moles, target Mₙ 5 kg/mol), were polymerized for 2 hours at 85°C (98%cv HEMA).

1.7188g of the above low molecular weight aqueous solution was added to a vial with 11.1949g of de-ionized water and 5.4146g MMA. The mixture was polymerized for 2 hours at 90°C, reaching 33% conversion of MMA. Di=152 with narrow distribution (1.17).

While preferred embodiments of the invention have been shown and described herein, it will be understood that such embodiments are provided by way of example only. Numerous variations, changes and substitutions will occur to those skilled in the art without departing from the spirit of the invention. Accordingly, it is intended that the appended claims cover all such variations as fall within the spirit and scope of the invention.

## Claims

1. A polymer particle dispersion in an aqueous medium comprising an emulsion polymerized polymer and a macro initiator covalently bonded to the emulsion polymerized polymer,
wherein the macro initiator comprises a hydrophilic, pH-insensitive monomer in reacted form; and
the emulsion polymerized polymer is comprised of at least one additional ethylenically unsaturated monomer in polymerized form,
wherein said polymer has the formula R-{[(A)ₓ(B)_{y}]-[(C)ₘ]ₚ-Y}_{n or 1}, where A is the hydrophilic, pH-insensitive monomer, B is a comonomer, C is at least one ethylenically unsaturated monomer, Y is a terminal group, x≥1, y≥0, m≥1, n≥2, and p≥1, wherein if p>1 each C segment has a distinct composition, and A and B may appear in any order or sequence within the living macro initiator, and R is of the formula (I) or (III): 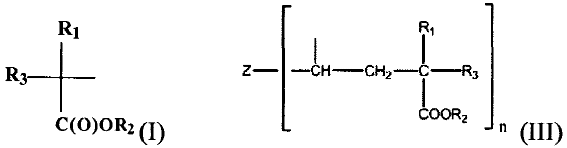
wherein R₁ and R₃, identical or different, represent a linear or branched alkyl group, with the number of carbon atoms from 1 to 3; R₂ represents a hydrogen atom or a linear or branched alkyl group having a number of carbon atoms from 1 to 8, a phenyl group, an alkaline metal ion, or an ammonium ion; and Z represents an aryl group or a group of the formula Z₁-[X-C(O)]ₙ, in which, Z₁ represents a polyfunctional structure where X is an oxygen atom, a nitrogen atom carrying a carbon group, a hydrogen atom, or a sulfur atom, said ethylenically unsaturated monomer being selected from the group consisting of (meth)acrylates, styrenes, (meth)acrylamides, (meth)acrylonitriles, and mixtures thereof, and
wherein said macroinitiator comprises at least one water-soluble salt of a monomer comprising an acryloyl group and a sulfonic acid group in polymerized form.

2. A polymer particle dispersion according to claim 1, wherein the monomer comprising an acryloyl group and a sulfonic acid group in polymerized form is 2-acrylamido-2-methylpropanesulfonic acid (AMPS).

3. A polymer particle dispersion according to claim 1, wherein the emulsion polymerized polymer comprises a homo- or copolymer, said copolymer being a statistical, random, block, or a gradient copolymer, and said emulsion polymerized polymer is selected from the group consisting of polymers based on (meth)acrylates, styrenes, (meth)acrylamides, (meth)acrylonitriles, and mixtures thereof.

4. A polymer particle dispersion according to claim 1, wherein the polymer particle dispersion has a pH less than 7.

5. A paint, coating, or adhesive composition comprising a polymer particle dispersion according to claim 1.

6. A paint, coating, or adhesive composition comprising a polymer particle dispersion according to claim 1 and at least one additional paint, coating, or adhesive component.

7. A polymer particle dispersion in an aqueous medium according to claim 1, wherein Y is R' of the formula (II):

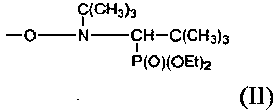

8. A method of making the polymer particle dispersion according to any of claims 1-4 and 7, said method comprising:
reacting said least one ethylenically unsaturated monomer with said living macro initiator in an aqueous media and without a surfactant to effect polymerization of the at least one monomer.

9. A method according to claim 8, wherein the living macroinitiator is formed in an aqueous media by performing a controlled radical polymerization of the hydrophilic, pH-insensitive monomer in the presence of an alkoxyamine compound having either formula (IV) or (V): 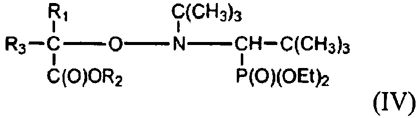 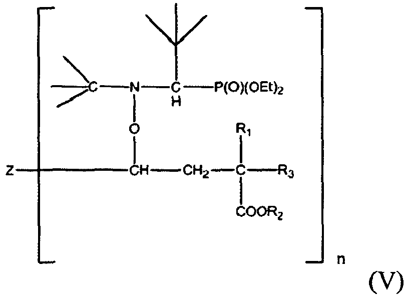 wherein R₁ and R₃, identical or different, represent a linear or branched alkyl group, with the number of carbon atoms from 1 to 3; R₂ represents a hydrogen atom, a linear or branched alkyl group having a number of carbon atoms from 1 to 8, a phenyl group, an alkaline metal ion, or an ammonium ion; Z represents an aryl group or a group of the formula Z₁-[X-C(O)]ₙ, in which, Z₁ represents a polyfunctional structure where X is an oxygen atom, a nitrogen atom carrying a carbon group, a hydrogen atom, or a sulfur atom; and n≥2.

10. A method according to claim 9, wherein the controlled radical polymerization is a nitroxide-mediated or reversible-addition-fragmentation-transfer (RAFT) polymerization.

11. A method according to claim 9, wherein the alkoxyamine compound is *N-(2-*methylpropyl)-*N*-(1-diethylphosphono-2,2,-dimethylpropyl)-*O*-(2-carboxylprop-2-yl) hydroxylamine.

12. A method according to claim 9, wherein a non-sulfonated monomer is copolymerized with the hydrophilic, pH-insensitive monomer.

13. A method according to claim 9, wherein the living macroinitiator is prepared with a reversible-addition-fragmentation-transfer (RAFT) agent.

## Patentansprüche

1. Polymerteilchendispersion in einem wässrigen Medium, umfassend ein emulsionspolymerisiertes Polymer und einen kovalent an das emulsionspolymerisierte Polymer gebundenen Makroinitiator, wobei der Makroinitiator ein hydrophiles, pHunempfindliches Monomer in umgesetzter Form umfasst; und
das emulsionspolymerisierte Polymer aus mindestens einem zusätzlichen ethylenisch ungesättigten Monomer in polymerisierter Form besteht,
wobei das Polymer die Formel R-{[(A)ₓ(B)_{y}]-[(C)ₘ]ₚ-Y}_{n oder 1} aufweist, wobei A für das hydrophile, pHunempfindliche Monomer steht, B für ein Comonomer steht, C für mindestens ein ethylenisch ungesättigtes Monomer steht, Y für eine Endgruppe steht, x ≥ 1, y ≥ 0, m ≥ 1, n ≥ 2 und p ≥ 1, wobei im Fall von p > 1 jedes C-Segment eine eigenständige Struktur aufweist und A und B in dem lebenden Makroinitiator in beliebiger Reihenfolge oder Sequenz erscheinen können und R die Formel (I) oder (III) aufweist: 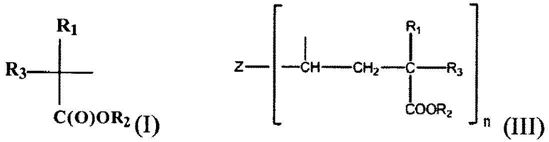
wobei R₁ und R₃, die gleich oder verschieden sind, für eine lineare oder verzweigte Alkylgruppe, deren Zahl von Kohlenstoffatomen 1 bis 3 beträgt, stehen;
R₂ für ein Wasserstoffatom oder eine lineare oder verzweigte Alkylgruppe, deren Zahl von Kohlenstoffatomen 1 bis 8 beträgt, eine Phenylgruppe, ein Alkalimetallion oder ein Ammoniumion steht und Z für eine Arylgruppe oder eine Gruppe der Formel Z₁-[X-C(O)_{n n} steht, wobei Z₁ für eine polyfunktionelle Struktur steht, wobei X für ein Sauerstoffatom, ein Stickstoffatom, dass ein Kohlenstoffatom trägt, ein Wasserstoffatom oder ein Schwefelatom steht,
wobei das ethylenisch ungesättigte Monomer aus der Gruppe bestehend aus (Meth)acrylaten, Styrolen, (Meth)acrylamiden, (Meth)acrylnitrilen und Mischungen davon ausgewählt ist und
wobei der Makroinitiator mindestens ein wasserlösliches Salz eines Monomers mit einer Acryloylgruppe und einer Sulfonsäuregruppe in polymerisierter Form umfasst.

2. Polymerteilchendispersion nach Anspruch 1, wobei es sich bei dem Monomer mit einer Acryloylgruppe und einer Sulfonsäuregruppe in polymerisierter Form um 2-Acrylamido-2-methylpropansulfonsäure (AMPS) handelt.

3. Polymerteilchendispersion nach Anspruch 1, wobei das emulsionspolymerisierte Polymer ein Homo- oder Copolymer umfasst, wobei es sich bei dem Copolymer um ein statistisch, nach dem Zufallsprinzip, block-artig oder gradientenartig aufgebautes Copolymer handelt und das emulsionspolymerisierte Polymer aus der Gruppe von Polymeren auf Basis von (Meth)-acrylaten, Styrolen, (Meth)acrylamiden, (Meth)-acrylnitrilen und Mischungen davon ausgewählt ist.

4. Polymerteilchendispersion nach Anspruch 1, wobei die Polymerteilchendispersion einen pH-Wert von weniger als 7 aufweist.

5. Anstrichmittel-, Lack- oder Klebstoffzusammensetzung, umfassend eine Polymerteilchendispersion nach Anspruch 1.

6. Anstrichmittel-, Lack- oder Klebstoffzusammensetzung, umfassend eine Polymerteilchendispersion nach Anspruch 1 und mindestens eine zusätzliche Anstrichmittel-, Lack- oder Klebstoffkomponente.

7. Polymerteilchendispersion in einem wässrigen Medium nach Anspruch 1, wobei Y für R' der Formel (II) steht:

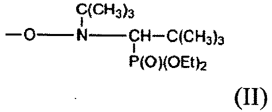

8. Verfahren zur Herstellung der Polymerteilchendispersion nach einem der Ansprüche 1 bis 4 und 7, bei dem man:
mindestens ein ethylenisch ungesättigtes Monomer in einem wässrigen Medium und ohne Tensid mit dem lebenden Makroinitiator umsetzt, wodurch das mindestens eine Monomer polymerisiert wird.

9. Verfahren nach Anspruch 8, bei dem der lebende Makroinitiator in einem wässrigen Medium gebildet wird, indem man eine kontrollierte Radikalpolymerisation des hydrophilen, pH-unempfindlichen Monomers in Gegenwart einer Alkoxyamin-Verbindung der Formel (IV) oder (V) durchführt: 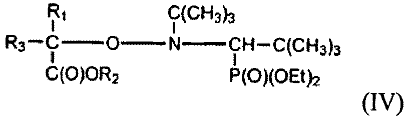 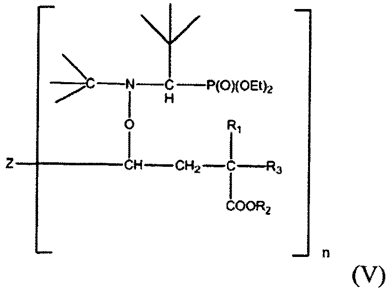 wobei R₁ und R₃, die gleich oder verschieden sind, für eine lineare oder verzweigte Alkylgruppe, deren Zahl von Kohlenstoffatomen 1 bis 3 beträgt, stehen; R₂ für ein Wasserstoffatom, eine lineare oder verzweigte Alkylgruppe, deren Zahl von Kohlenstoffatomen 1 bis 8 beträgt, eine Phenylgruppe, ein Alkalimetallion oder ein Ammoniumion steht; Z für eine Arylgruppe oder eine Gruppe der Formel Z₁-[X-C(O)]ₙ steht, wobei Z₁ für eine polyfunktionelle Struktur steht, wobei X für ein Sauerstoffatom, ein Stickstoffatom, dass ein Kohlenstoffatom trägt, ein Wasserstoffatom oder ein Schwefelatom steht und n ≥ 2.

10. Verfahren nach Anspruch 9, bei dem es sich bei der kontrollierten Radikalpolymerisation um eine Nitroxid-vermittelte Polymerisation oder reversible Additions-Fragmentierungs-Kettenübertragungs-Polymerisation (RAFT-Polymerisation) handelt.

11. Verfahren nach Anspruch 9, bei dem es sich bei der Alkoxyamin-Verbindung um *N*-(2-Methylpropyl)-*N*-(1-diethylphosphono-2,2-dimethylpropyl)-*O*-(2-carboxylprop-2-yl)hydroxylamin handelt.

12. Verfahren nach Anspruch 9, bei dem ein nicht sulfoniertes Monomer mit dem hydrophilen, pH-unempfindlichen Monomer copolymerisiert wird.

13. Verfahren nach Anspruch 9, bei dem der lebende Makroinitiator mit einem Mittel für die reversible Additions-Fragmentierungs-Kettenübertragung (RAFT-Agens) hergestellt wird.

## Revendications

1. Dispersion de particules de polymère dans un milieu aqueux comprenant un polymère polymérisé en émulsion et un macro-initiateur lié de façon covalente au polymère polymérisé en émulsion,
dans laquelle le macro-initiateur comprend un monomère hydrophile, insensible au pH sous forme ayant réagi ; et
le polymère polymérisé en émulsion est constitué d'au moins un monomère à insaturation éthylénique additionnel sous forme polymérisée,
où ledit polymère a la formule R-{[(A)ₓ(B)_{y}]-[(C)ₘ]ₚ-Y}_{n ou 1}, où A est le monomère hydrophile, insensible au pH, B est un comonomère, C est au moins un monomère à insaturation éthylénique, Y est un groupe terminal, x ≥ 1, y ≥ 0, m ≥ 1, n ≥ 2 et p ≥ 1, où, si p > 1, chaque segment C a une composition distincte, et A et B peuvent apparaître dans un ordre ou une séquence quelconque dans le macro-initiateur vivant, et R est de formule (I) ou (III) : 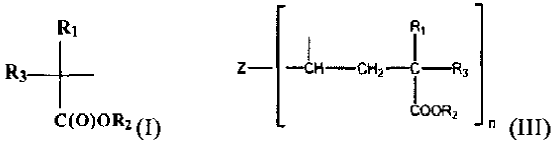
où R₁ et R₃, identiques ou différents, représentent un groupe alkyle linéaire ou ramifié, le nombre d'atomes de carbone étant de 1 à 3 ; R₂ représente un atome d'hydrogène ou un groupe alkyle linéaire ou ramifié ayant un nombre d'atomes de carbone de 1 à 8, un groupe phényle, un ion de métal alcalin, ou un ion ammonium ; et Z représente un groupe aryle ou un groupe de formule Z₁-[X-C(O)]ₙ, dans laquelle, Z₁ représente une structure polyfonctionnelle où X est un atome d'oxygène, un atome d'azote comportant un groupe carboné, un atome d'hydrogène, ou un atome de soufre,
ledit monomère à insaturation éthylénique étant choisi dans le groupe constitué de (méth)acrylates, styrènes, (méth)acrylamides, (méth)acrylonitriles, et des mélanges de ceux-ci, et
où ledit macro-initiateur comprend au moins un sel soluble dans l'eau d'un monomère comprenant un groupe acryloyle et un groupe acide sulfonique sous forme polymérisée.

2. Dispersion de particules de polymère selon la revendication 1, dans laquelle le monomère comprenant un groupe acryloyle et un groupe acide sulfonique sous forme polymérisée est l'acide 2-acrylamido-2-méthylpropanesulfonique (AMPS).

3. Dispersion de particules de polymère selon la revendication 1, dans laquelle le polymère polymérisé en émulsion comprend un homo- ou copolymère, ledit copolymère étant un copolymère statistique, aléatoire, séquencé ou à gradient, et ledit polymère polymérisé en émulsion est choisi dans le groupe constitué de polymères à base de (méth)acrylates, styrènes, (méth)acrylamides, (méth)acrylonitriles, et des mélanges de ceux-ci.

4. Dispersion de particules de polymère selon la revendication 1, dans laquelle la dispersion de particules de polymère a un pH inférieur à 7.

5. Composition de peinture, de revêtement ou adhésive comprenant une dispersion de particules de polymère selon la revendication 1.

6. Composition de peinture, de revêtement ou adhésive comprenant une dispersion de particules de polymère selon la revendication 1 et au moins un composant de peinture, revêtement ou adhésif additionnel.

7. Dispersion de particules de polymère dans un milieu aqueux selon la revendication 1, dans laquelle Y est R' de formule (II) :

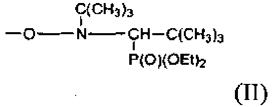

8. Procédé de fabrication de la dispersion de particules de polymère selon l'une quelconque des revendications 1 à 4 et 7, ledit procédé comprenant :
la réaction dudit au moins un monomère à insaturation éthylénique avec ledit macro-initiateur vivant dans un milieu aqueux et sans tensioactif pour effectuer la polymérisation de l'au moins un monomère.

9. Procédé selon la revendication 8, dans lequel le macro-initiateur vivant est formé dans un milieu aqueux en effectuant une polymérisation radicalaire contrôlée du monomère hydrophile, sensible au pH en présence d'un composé alcoxyamine ayant la formule (IV) ou (V) : 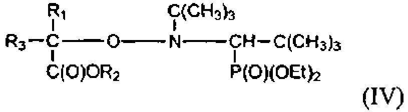 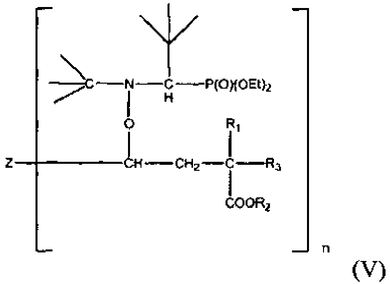 où R₁ et R₃, identiques ou différents, représentent un groupe alkyle linéaire ou ramifié, le nombre d'atomes de carbone étant de 1 à 3 ; R₂ représente un atome d'hydrogène, un groupe alkyle linéaire ou ramifié ayant un nombre d'atomes de carbone de 1 à 8, un groupe phényle, un ion de métal alcalin, ou un ion ammonium ; et Z représente un groupe aryle ou un groupe de formule Z₁-[X-C(O)]ₙ, dans laquelle, Z₁ représente une structure polyfonctionnelle où X est un atome d'oxygène, un atome d'azote comportant un groupe carboné, un atome d'hydrogène, ou un atome de soufre ; et n≥ 2.

10. Procédé selon la revendication 9, dans lequel la polymérisation radicalaire contrôlée est une polymérisation médiée par nitroxyde ou transfert de chaîne réversible par addition-fragmentation (RAFT).

11. Procédé selon la revendication 9, dans lequel le composé alcoxyamine est la N-(2- méthylpropyl)-*N*-(1-diéthylphosphono-2,2,-diméthylpropyl)-O-(2-carboxyprop-2-yl)hydroxylamine.

12. Procédé selon la revendication 9, dans lequel un monomère non sulfoné est copolymérisé avec le monomère hydrophile, insensible au pH.

13. Procédé selon la revendication 9, dans lequel le macro-initiateur vivant est préparé avec un agent de transfert de chaîne réversible par addition-fragmentation (RAFT).
